# EUROPEAN PATENT APPLICATION

(11) **EP 1 928 157 A2**
(43) Date of publication of application: **04.06.2008**
(21) Application number: 07022384.7
(22) Date of filing: 19.11.2007
(51) Int. Cl.: H04M 1/02

(54) **Operation mode-driving mechanism and method for mobile terminal with two displays and two input units**

(30) Priority: 01.12.2006 KR 20060120466
(71) Applicant: Samsung Electronics Co., Ltd, Yeongtong-gu Suwon-si, Gyeonggi-do (KR)
(72) Inventor: Sohn, Mi Ae, Suwon-si Gyeonggi-do (KR); Jang, Sun Hee, Suwon-si Gyeonggi-do (KR)
(74) Representative: Boakes, Jason Carrington

(57) **Abstract**

Provided are an operation mode-driving mechanism and method for a mobile terminal is provided for of rapidly driving specific operation mode. The operation mode-driving method is provided for a mobile terminal including a first body having a first display on a top surface and a second display on a bottom surface and a second body having a first keypad on a top surface and a second keypad on a bottom surface, the second body being pivotally coupled with the first body on a longitudinal axis of the mobile terminal. The operation mode-driving method includes determining whether a rotation-based driving function is activated and if the rotation-based driving function is activated, driving an operation mode on the basis of whether the first and second bodies are rotated relative to each other.

## Description

### BACKGROUND OF THE INVENTION

### 1. Field of the Invention

The present invention relates to a mobile terminal and, in particular, to an operation mode-driving mechanism and method for a mobile terminal that are capable of rapidly switching between multiple operation modes.

### 2. Description of the Related Art

A mobile terminal is a pocket-sized computing device such as a mobile phone, a digital camera, a portable digital broadcast receiver, a Personal Digital Assistant (PDA), a Portable Media Player (PMP), and a palmtop computer. Typically, such mobile devices are designed in a slim and compact form factor, considerating their portability, while merging various multimedia functions and additional communication functions. The multimedia functions include a digital broadcast receiver function, a camera function, and an MPEG-1 Audio Layer 3 (MP3) player function; and the additional communication functions include a Global Positioning . System function, a Bluetooth^{®} networking function, and a Wireless Local Area Networking (WLAN) function. With such a tendency towards convergence, the mobile devices are rapidly evolving into multi-purpose devices.

Typically, the mobile terminal is provided with a small display screen for displaying both the multimedia data and communication data. In a multimedia service mode, however, the display screen does not guarantee an image quality of the multimedia data due to the limited screen size. In order to provide multimedia-adaptive image quality, a dual display mobile terminal having two display screens, one for communication data and the other for multimedia data, has been proposed.

In the dual display mobile terminal, one of the two display screens is selectively activated in accordance with the operation mode of the mobile terminal.

However, the conventional dual display mobile terminal has a drawback in that a display selection must precede an operation mode-driving, e.g., between a communication mode and a multimedia mode, with a complex and time consuming key manipulation.

### SUMMARY OF THE INVENTION

The present invention has been made in an effort to solve the above problems, and the present invention provides an operation mode-driving mechanism and method for a dual display mobile terminal that enables a display to be adaptively selected in accordance with an operation mode.

The present invention provides an operation mode-driving mechanism and method for a dual display mobile terminal having two bodies pivotable with respect to each other that are capable of executing an operation mode in accordance with a pivot angle between the two bodies.

The present invention provides an operation mode-driving mechanism and method for a dual display mobile terminal having two bodies pivotable with respect to each other that are capable of executing a multimedia mode and configuring keys so as to generate sequences associated with the multimedia mode, on the basis of a sequence generated by a pivot angle between the two bodies.

The present invention provides an operation mode-driving mechanism and method for a mobile terminal having two bodies pivotable with respect to each other that are capable of executing, in a broadcast mode, a broadcast playback function on the basis of a sequence generated by a pivot angle between the two bodies, the pivot angle matching a key manipulation for the sequence.

The present invention provides an operation mode-driving mechanism and method for a mobile terminal having two bodies pivotable with respect to each other that are capable of executing a communication mode or a multimedia mode on the basis of a sequence generated by a pivot angle between the two bodies, the pivot angle matching a key manipulation for the sequence.

The present invention provides an operation mode-driving mechanism and method for a mobile terminal having two bodies pivotable with respect to each other that are capable of executing a communication mode or a multimedia mode and configuring keys so as to generate sequences associated with the selected operation mode, on a basis of a sequence generated by a pivot angle between the two bodies.

In accordance with an aspect of the present invention, the above and other objects are accomplished by an operation mode-driving method for a mobile terminal including a first body having a first display and a second display and a second body having a first keypad and a second keypad, the second body being pivotally coupled with the first body on a longitudinal axis of the mobile terminal. The operation mode-driving method includes determining whether a rotation-based driving function is activated and if a rotation-based driving function is activated, driving an operation mode on the basis of whether the first and second bodies are rotated relative to each other.

In accordance with another aspect of the present invention, the above and other objects are accomplished by an operation mode-driving method for a mobile terminal including a first body having a first display and a second display and a second body having a first keypad and a second keypad, the second body being pivotally coupled with the first body on a longitudinal axis of the mobile terminal. The operation mode-driving method includes determining whether a rotation between the first and second bodies is detected together with an execution code and if a rotation and an execution code are detected, driving a target operation mode associated with the rotation and executing a target function indicated by the execution code.

In accordance with another aspect of the present invention, the above and other objects are accomplished by an operation mode-driving method for a mobile terminal including a first body having a first display and a second display and a second body having a first keypad and a second keypad, the second body being pivotally coupled with the first body on a longitudinal axis of the mobile terminal. The operation mode-driving method includes determining whether a rotation-based driving function is activated; if a rotation-based driving function is activated, detecting a coupling state of the first and second bodies; operating the mobile terminal in a multimedia mode if the mobile terminal is in a normal state; and if the mobile terminal is in a rotated state, operating the mobile terminal in a communication mode.

In accordance with another aspect of the present invention, the above and other objects are accomplished by an operation mode-driving method for a mobile terminal including a first body having a first display and a second display and a second body having a first keypad and a second keypad, the second body being pivotally coupled with the first body on a longitudinal axis of the mobile terminal. The operation mode-driving method includes determining whether a rotation-based driving function is activated; if a rotation-based driving function is activated, detecting a coupling state of the first and second bodies and execution code; if the coupling state is a rotated state, operating the mobile terminal in a multimedia mode and executing a function indicated by the execution code; and if the coupling state is a normal state, operating the mobile terminal in a communication mode and executing a function indicated by the execution code.

In accordance with another aspect of the present invention, the above and other objects are accomplished by a mobile terminal. The mobile terminal includes a first body having a first display on a front surface of the first body and a second display on a rear surface of the first body; a second body having a first keypad on a front surface of the second body facing in the same direction as the first screen and a second keypad on a rear surface of the second body facing the same direction of the second screen, the first and second bodies being coupled to rotate relative to each other on a longitudinal axis of the mobile terminal; a rotation detector for detecting a rotation between the first and second bodies; and a control unit for, if a rotation is detected, driving a target operation mode.

### BRIEF DESCRIPTION OF THE DRAWINGS

The above and other objects, features and advantages of the present invention will be more apparent from the following detailed description in conjunction with the accompanying drawings, in which:
FIG. 1A is a front view illustrating a dual display mobile terminal equipped with an operation mode-driving mechanism according to an exemplary embodiment of the present invention;
FIG. 1B is a perspective view of the mobile terminal of FIG. 1A in a broadcast mode;
FIGS. 2A to 2D are plane views illustrating configurations of the mobile terminal of FIG. 1A in different operation modes;
FIG. 3 is a block diagram illustrating a configuration of a mobile terminal according to an exemplary embodiment of the present invention;
FIG. 4 is a flowchart illustrating an operation mode-driving method according to an exemplary embodiment of the present invention;
FIG. 5 is a flowchart illustrating a fast execution table generation procedure of FIG. 4;
FIG. 6 is a flowchart illustrating a function execution procedure of the operation mode-driving method of FIG, 4 according to an exemplary embodiment of the present invention;
FIG. 7 is a flowchart illustrating a function execution procedure of the operation mode-driving of FIG. 4 according to another exemplary embodiment of the present invention; and
FIG. 8 is a flowchart illustrating an operation mode-driving method according to another exemplary embodiment of the present invention.

### DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention,

In the following descriptions, specific terms such as "function key" and "operation mode" are defined to enable a clear understanding of the detailed description and the claims. Unless otherwise noted, terms are to be understood according to conventional usage by those skilled in the relevant art.

A "rotated status" is a status in which a first body and a second body of the mobile terminal are pivoted on an axis connecting the two bodies in a longitudinal direction, and a "normal status" is a status in which the two bodies are coupled so as to be in an initial bar-type contour. A "mode" is an operation mode of the mobile terminal, particularly including a multimedia mode and a communication mode.

A "function execution instruction" is a sequence for executing one of sub-operation modes associated with a current operation mode (for example, a camera mode, a broadcast mode, an electronic map mode, and a music playback mode in the multimedia mode) or for executing an option provided for a specific function (for example, a service channel selection in the broadcast mode). The sequence can be generated by a key manipulation with reference to a menu provided for the current operation mode. The "menu" is a list of options associated with a current operation mode. A "shortcut key" is a key assigned to select a sequence for executing an available option listed in a menu or playing an available service channel in the broadcast mode.

The available options can be selected by function keys, specific shortcut number keys, and combinations thereof. If a function key and a shortcut number key are selected in series, a corresponding menu option is executed. If just a shortcut number key is selected, a corresponding option listed in a default menu is selected.

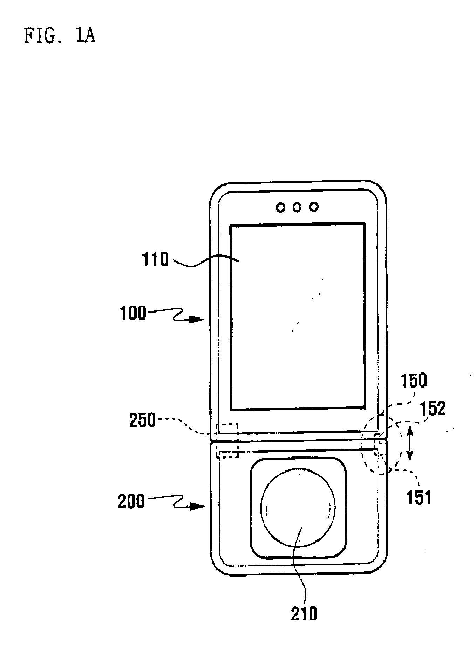

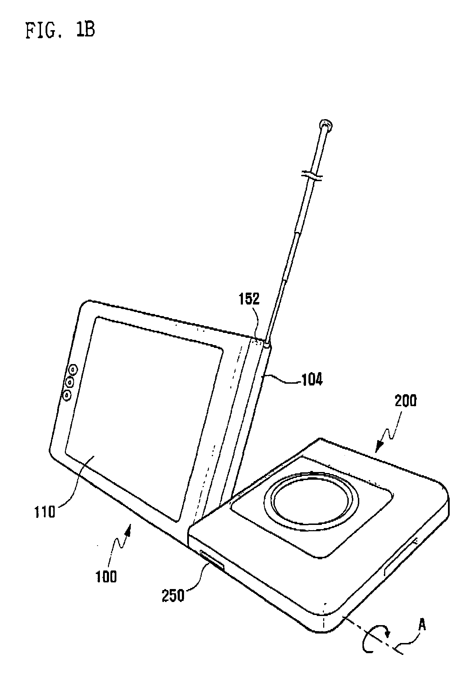

FIG. 1A is a front view illustrating a dual display mobile terminal equipped with an operation mode-driving mechanism according to an exemplary embodiment of the present invention, and FIG. 1B is a perspective view of the mobile terminal of FIG. 1A in a broadcast mode.

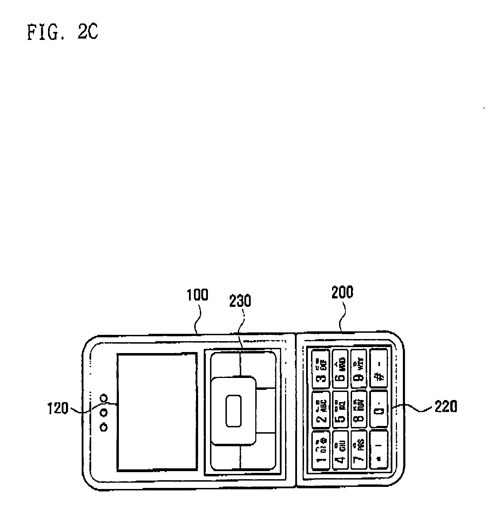

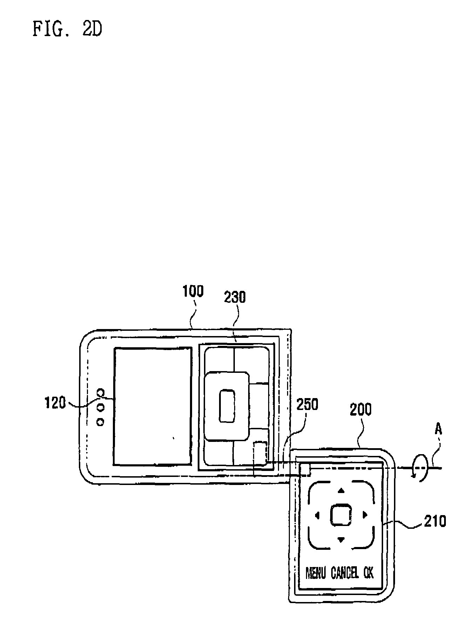

Referring to FIGS. 1A and 1B, the mobile terminal includes two bodies 100 and 200 pivotally connected with each other. The first body 100 is provided with a first display 110 on a front surface and a second display 120, shown in FIGS. 2C and 2D, on a rear surface, and the second body 200 is provided with a first keypad 210.

The first and second bodies 100 and 200 are coupled by means of a hinge module 250. The hinge module 250 can be configured such that the second body 200 rotates on an axis situated along a length of the mobile terminal relative to the first body 100, in an automatic, semi-automatic or manual manner.

The hinge module 250 also provides a stepwise stopping mechanism such that the second body 200 rotates to stop at angles of 0° , 30° , 45° and 180° . In FIG. 1B, the second body 200 is rotated at an angle of 45° relative to the first body 100. In this case, the second body 20 can support the first body 100 to position such that the first display 100 is arranged in a landscape view.

The first body 100 is provided with the first display 110 installed on the front surface and the second display 120 installed on the opposite surface, i.e., the rear surface of the first body 100. The first and second displays 110 and 120 are preferably implemented with Liquid Crystal Display (LCD) panels. The first and second displays 110 and 120 can also be configured to support touchscreen functionality. The first display 110 is a widescreen display panel suitable for use in the multimedia mode including broadcast, camera, PMP, VOD, MP3, and image viewer modes; and the second display 120 is implemented with a small display panel, relative to the first display 110, for use in the communication mode, which includes a voice communication mode, a short message service mode, and a WLAN communication mode.

The first and second displays 110 and 120 are arranged to face in directions opposite to each other, and the first display 110 preferably has a larger screen size than a screen size of the second display 120.

The first body 100 can be provided with a camera. The camera is preferably arranged on the rear surface distant from a hinge axis A around the second display 120. In this case, a flash module can be provided around the camera.

The second body 200 is coupled with the first body 100 in longitudinal direction pivotally on the longitudinal axis A situated along the length of the mobile terminal. The first body 100 can stand at an angle with a plane according to the rotation angle relative to the second body 200.

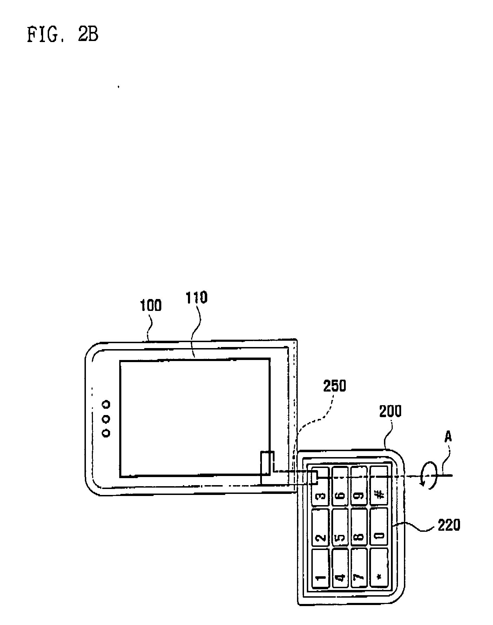

The second body 200 includes the first keypad 210 arranged on the front surface and a second keypad 220, shown in FIGS 2B and 2C, arranged on the rear surface. The first keypad 210 is implemented with a wheel-type key for improving a manipulation performance, and the second keypad 220 is implemented with a plurality of alphanumeric keys and function keys. The second keypad can provide navigation keys. In this embodiment, the second keypad is a 3x4 keypad, and a third keypad 230, shown in FIGS. 2C and 2D, is provided below the second display 120 of the first body 100. Preferably, the third keypad 230 is provided with navigation keys.

As described above, the first and second keypads 210 and 220 are arranged on the opposite surface of the second body 200, and a battery is arranged between the first and second keypads 210 and 220. By mounting the battery in the second body 200, the second body 200 can stably support the first body with the weight of the battery, in a rotated status.

The mobile terminal further includes a locking module 150 for protecting against an unexpected rotation of the second body 200 relative to the first body 100. The locking module 150 includes a sliding locking knob 151 installed at an edge of the second body 200 and a hole 152 formed at an edge of the first body such that the locking knob 151 and the hole 152 are engaged with each other. In order to unlock the locking module 150, the locking knob 151 is implemented so as to slide out from the hole 152, The locking function of the locking module 150 can be implemented with the hinge module 250, i.e., the hinge module 250 can be structured such that the second body 200 is tightly fixed to the first body 100, i.e., in a locked state, when the second body 200 is positioned at an angle of 0° relative to the first body 100. The hinge module 250 can be configured to operate in an automatic, a semi-automatic, or a manual manner.

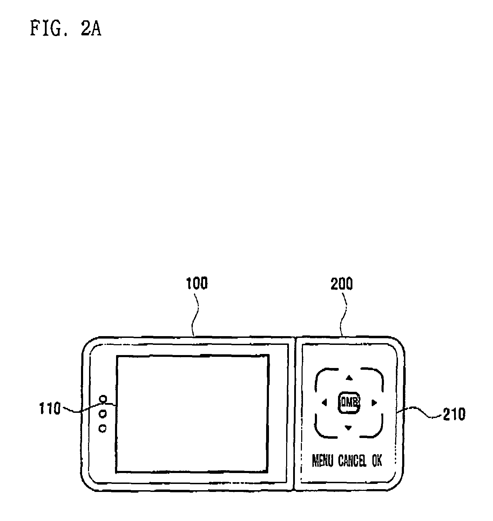

FIGS. 2A to 2D are plane views illustrating configurations of the mobile terminal of FIG. 1A in different operation modes. In this embodiment, when the first and second bodies 100 and 200 are tightly locked in the form of a bar as shown in FIGS. 2A and 2C, the mobile terminal is in a normal status. However, when the first and second bodies are rotated to each other at a specific angle, the mobile terminal is in a rotated status.

Referring to FIGS. 2A and 2B, the first display 100 has a relatively large screen size and is activated for displaying content in the multimedia mode. Compared to the first display 100, the second display 120 shown in FIGS. 2C and 2D has a small screen size. The second display 120 is provided with a third keypad 230 on the rear surface of the first body 100 and activated in the communication mode.

When the mobile terminal operates in the communication mode, the second and third keypads 220 and 230 are activated for enabling input of commands and data.

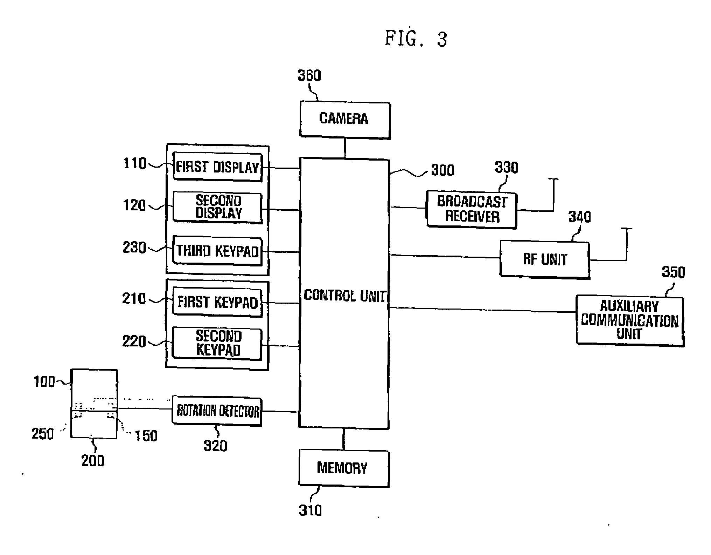

FIG. 3 is a block diagram illustrating a configuration of a mobile terminal according to an exemplary embodiment of the present invention.

Referring to FIG. 3, the mobile terminal includes the first and second bodies 100 and 200 pivotally coupled with each other by means of a hinge module 250 such that one body can rotate relative to the other body on a longitudinal axis A.

The mobile terminal also includes a locking module 150 mounted at edges of the first and second bodies 100 and 200, which are opposite the edges where the hinge module 250 is installed, for locking or unlocking the rotation of the first and second bodies 100 and 200. The hinge module 250 can be implemented with a rotation lock mechanism, and in such a case, the locking module 150 can be omitted. The first body 100 is provided with the first display 110 and the second display 120, which has a smaller size than the size of the first display 120. The second display 120 is arranged on the rear surface of the first body 100 with the third keypad 230. The second body 200 includes the first and second keypads 210 and 220. When the mobile terminal is in the normal state, in which the first and second bodies 110 and 120 are coupled without rotation, the first display 110 and the first keypad 210 are activated in the multimedia mode, and the second display 120 and the second and third keypads 220 and 230 are activated in the communication mode.

In the case that a battery is mounted in the second body 200, the first body 100 is configured as shown in FIG. 3. The internal elements of FIG. 3 can be secured in the first and second bodies 100 and 200 in an appropriate arrangement.

In this embodiment, when the locking module 150 is unlocked, or when the two bodies 100 and 200 of the mobile terminals are rotated from each other on the longitudinal axis A, a predetermined function is enabled. For this purpose, a sensor is provided to at least one of the hinge module 250 and the locking module 150 for detecting a locked/unlocked state of the locking module 150 and the rotation of the bodies. A rotation detector 320 receives signals from the sensors and transfer the signals to a control unit 300.

The mobile terminal includes a broadcast receiver 330 for receiving broadcast signals. Preferably, the broadcast receiver is a digital broadcast receiver such as Digital Multimedia Broadcasting (DMB) receiver, Digital Video Broadcasting (DVB) receiver, and a Media Forward Link Only (FLO) receiver. The broadcast receiver 330 is provided with a tuner, demodulator, and decoder. The decoder can alternatively be integrated into the control unit 300.

The mobile terminal includes a camera 360 provided with an image sensor and a video processing unit. The video processing unit can alternatively be integrated into the control unit 300. The broadcast receiver 330 and the camera 360 are selectively activated in the multimedia mode.

The mobile terminal includes a Radio Frequency (RF) unit 340 having an RF transmitter, an RF receiver, a modem, and a codec. The modem and codec can alternatively be incorporated into the control unit 300.

The mobile terminal includes an auxiliary communication unit 350 configured with a wireless communication standard such as Bluetooth, Wireless Broadband (WiBro), World Interoperability for Microwave Access (WiMAX), or a wired communication, standard such as Universal Serial Bus (USB).

The mobile terminal includes a memory unit 310. The memory unit 310 is provided with a program memory for storing application programs performing various functions and data memory for storing application data generated in the communication mode and the multimedia mode.

The control unit 300 controls general operations of the mobile terminal and overall functions in the communication mode and the multimedia mode. The control unit 300 can be provided with a communication control part responsible for operations in the communication mode and a multimedia control part responsible for operations in the multimedia mode. In this embodiment, it is assumed that the control unit 300 controls the operations in the communication and multimedia modes integrally.

As described above, the mobile terminal includes the first and second bodies 100 and 200. The first body 100 includes the first display unit 110 on the front surface of the first body 100 and the second display unit 120 and the third keypad 230 on the rear surface of the first body 100. The second body 200 includes the first keypad 210 on the front surface of the second body 200 and the second keypad 220 on the rear surface of the second body 200. The control unit 300 enables the first display 110 to display multimedia data in the multimedia mode and the second display 120 to display communication related information in the communication mode. In the communication mode, the control unit 300 controls the second display 120 to display information generated by the second and third keypads 220 and 230.

In the multimedia mode, the second and third keypads 220 and 230 and the second display 120 are activated for allowing a user to select a multimedia function. If a multimedia function is selected, the control unit 300 displays information indicating the selected multimedia function on the second display 120 and then displays the data associated with the selected multimedia function on the first display 110, simultaneously switching-off the second display 120. Next, the control unit 300 performs multimedia functions in synchronization with the information displayed on the first display 110 and controls the first display 110 to display multimedia data.

In this embodiment, a multimedia function is configured using the second and third keypads 220 and 230 and the configuration is displayed on the second display 120. At the same time as the execution of the configured multimedia function, the presentation is handed over from the second display 120 to the first display 110 together with the activation of the first keypad 210 and the deactivation of the second and third keypads 220 and 230.

The multimedia function can be selected and executed by manipulating keys on the first keypad 210, i.e., when the mobile terminal is in the multimedia mode, the first keypad 210 is configured to provide a function key for executing a broadcast function such that the control unit 300 controls the first display 110 to display broadcast data on the screen in response to a sequence input by the function key.

In this embodiment, specific operation modes are registered in association with the rotation angle between the first and second bodies 100 and 200 such that a corresponding sequence for driving a specific operation mode is generated in accordance with the rotation angle, i.e., specific operation modes can be registered by the user in association with specific rotation angles between the first and second bodies 100 and 200, whereby the control unit 300 detects the rotation angle and drives one of the registered operation modes on the basis of the detected rotation angle. Since the operation mode of the mobile terminal is determined by the rotation angle between the first and second bodies, the mode switching can be performed through an intuitive manipulation of the mobile terminal, resulting in user convenience.

In one aspect of the present invention, the mobile terminal provides a function-setting mode which enables a registration of specific modes to be executed in association with rotation angles between the first and second bodies 100 and 200. If a rotation is detected, the control unit 300 executes the function mapped to the rotation angle. For example, if a rotation is detected and the rotation angle is mapped to the broadcast mode, the control unit 300 controls the broadcast receiver 330 to receive the broadcast data and controls the first display 110 to display the broadcast data.

The operation mode-driving method for a mobile terminal including a first body having a first display and a second display and a second body having a first keypad and a second keypad, the second body being pivotally coupled with the first body on a longitudinal axis of the mobile terminal determines whether a rotation-based driving function is activated and drives, if a rotation-based driving function is activated, an operation mode on the basis of whether the first and second bodies are rotated relative to each other.

The operation mode-driving method enables a setting of execution codes for executing functions associated with each operation mode. The operation modes include a broadcast playback mode. The second body rotates relative to the first body, and supports the first body in an erect and rotated state.

In another aspect of the present invention, the operation mode-driving method for a mobile terminal registers shortcut numbers associated with specific functions of a target operation mode (for example a multimedia mode or a communication mode) and if a rotation is detected between the first and second bodies together with one of the shortcut numbers, executing the functions mapped to the shortcut number.

The operation mode-driving method is provided to a mobile terminal including a first body having a first display and a second display and a second body having a first keypad and a second keypad. The second body is pivotally coupled with the first body on a longitudinal axis of the mobile terminal. The rotation mode-driving method determines whether a rotation between the first and second bodies is detected together with an execution code and if a rotation and an execution code, drives a target operation mode associated with the rotation and executing a target function indicated by the execution code.

The operation mode-driving method enables of setting execution codes for executing functions associated with each operation mode, each execution code including a shortcut number. The target operation mode is a broadcast playback mode and the shortcut number is mapped to a service channel. The second body rotates relative to the first body and supports the first body in an erect and rotated state,

Also, the operation mode-driving method provides a configuration screen for configuring the target operation mode and the execution codes and registers the target operation mode and the execution codes for executing functions of the target operation mode on the basis of user feedbacks, each execution code having an identification code for identifying the target operation mode and a shortcut number for indicating the target function.

In the rotation determination procedure, the mobile terminal checks whether the execution code contains an identification code; if the execution code contains an identification code, determines the target function of the target operation mode on the basis of the identification code and a shortcut number contained together with the identification code; and if the execution code does not contain an identification code, determines the target function is a broadcast playback mode and a service channel of the broadcast playback mode on the basis of a shortcut number contained in the execution code. The second body rotates relative to the first body and supports the first body in an erect and rotated state.

In another aspect of the present invention, the operation mode-driving method allows registering specific functions for a normal state and a rotated state in which a first and a second body are rotated relative to each other.

The rotated state is a state in which the first and second bodies 100 and 200 are rotated relative to each other, and the normal state is a state in which the first and second bodies are coupled without rotation. A target operation mode for the rotated state is a multimedia mode, and a target operation mode for the normal state is a communication mode. If a rotation is detected between the first and second bodies, the control unit 300 drives a predetermined operation mode. The operation mode can be a broadcast playback mode. For example, if the broadcast playback mode is registered for the rotated state and a message transmission mode is registered for the normal state, the control unit 200 checks whether the mobile terminal is in a normal mode or a rotated mode, and then drives the broadcast playback mode or the message transmission mode according to the state of the mobile terminal.

The operation mode-driving method is proved to a mobile terminal. The mobile terminal includes a first body having a first display and a second display and a second body having a first keypad and a second keypad. The second body is pivotally coupled with the first body on a longitudinal axis of the mobile terminal. The operation mode-driving method determines whether a rotation-based driving function is activated; if a rotation-based driving function is activated, detects a coupling state of the first and second bodies; if the mobile terminal is in a normal state, operates the mobile terminal in a multimedia mode; and if the mobile terminal is in a rotated state, operates the mobile terminal in a communication mode.

The operation mode-driving method also provides an operation mode configuration screen for configuring functions of the multimedia mode and the communication mode and configures the functions of the multimedia mode and the communication mode on the basis of user feedbacks. The rotated state is a state in which the first and second bodies are rotated relative to each other, and the normal state is a state in which the first and second bodies are coupled without rotation. Preferably, the multimedia mode is a broadcast playback mode, and the second body supports the first body in an erect and rotated state.

In another aspect of the present invention, the operation mode-driving method allows a registration of specific functions of operation modes (e.g., a multimedia mode and a communication mode) together with short numbers. Accordingly, the control unit 300 determines a target operation mode of the mobile terminal on the basis of whether the first and second bodies 100 and 200 are rotated relative to each other and determines a target function on the basis of the shortcut number. For example, if the mobile terminal is in the rotated state, the control unit 300 drives the multimedia mode, and if the mobile terminal is in the normal state, the control unit 300 drives the communication mode.

The operation mode-driving method is provided to a mobile terminal. The mobile terminal includes a first body having a first display and a second display and a second body having a first keypad and a second keypad, the second body being pivotally coupled with the first body on a longitudinal axis of the mobile terminal. The operation mode-driving method determines whether a rotation-based driving function is activated; if a rotation-based driving function is activated, detects a coupling state of the first and second bodies and an execution code input; if the coupling state is a rotated state, operates the mobile terminal in a multimedia mode and executes a function indicated by the execution code; and if the coupling state is a normal state, operates the mobile terminal in a communication mode and executes a function indicated by the execution code.

The operation mode-driving method further provides an operation mode configuration screen for configuring functions of the multimedia mode and the communication mode; if a user feedback for selecting the multimedia mode is detected, presents available functions associated with the multimedia mode; registers the functions with shortcut numbers on the basis of user feedbacks; if a user feedback for selecting the communication mode is detected, presents available functions associated with the communication mode; and registers the functions with shortcut numbers on the basis of user feedbacks. The rotated state is a state in which the first and second bodies are rotated relative to each other, and the normal state is a state in which the first and second bodies are coupled without rotation. The multimedia mode is a broadcast playback mode and the shortcut number is a channel for a service channel. The second body supports the first body in an erect and rotated state.

Operations of the above-structured mobile terminal are described hereinafter in more detail.

In the following embodiments, the control unit 200 of the mobile terminal detects the rotation angle between the first and second bodies 100 and 200. In order to simplify the explanation, it is assumed that the second body 200 rotates relative to the first body 100. The mobile terminal can be in the normal state and the rotated state. In the normal state, the locking module 150 is locked so as to protect the second body 200 from being rotated relative to the first body 100. In the rotated state, the locking module 150 is unlocked such that the second body 200 can rotate relative to the first body 100 by means of the hinge module 250. It is assumed that the rotation angle-driven execution mode is the multimedia mode.

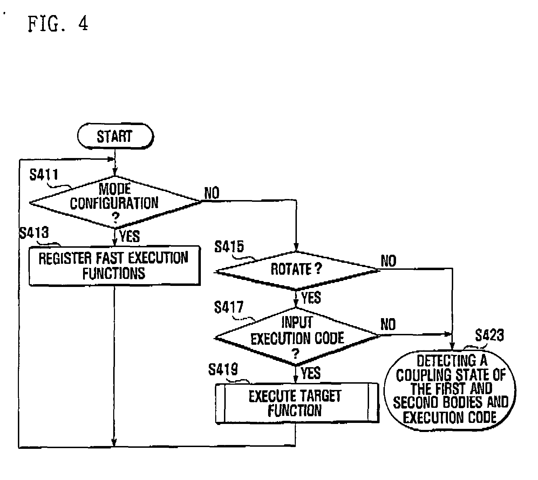

FIG. 4 is a flowchart illustrating an operation mode-driving method according to an exemplary embodiment of the present invention.

In FIG. 4, the control unit 300 configures the mobile terminal with parameters associated with a specific operation mode in a user configuration mode, and if a rotation of the second body 200 relative to the first body 100 is detected, executes a function associated with a rotation angle between the first and second bodies 100 and 200 with reference to the configuration set In the user configuration mode. First, the control unit 300 determines whether a menu is selected through the third keypad 230 and then one of menu items listed in the menu is selected, at step S411. If a menu item selection is detected, the control unit 300 controls the second display 120 to display an option settings screen displaying operation mode options associated with the selected menu item. If an operation mode option and an execution command option (in this embodiment, the execution command option is a shortcut number) are selected from the option settings screen, the control unit 300 registers the selected operation mode and shortcut number within a fast execution table, at step S413. Such registration procedures can be repeated such that a plurality of operations modes can be registered to the fast execution table.

After the fast execution table is created, the control unit determines whether a rotation detection signal is received from the rotation detector 320, at step S415. The rotation detector 320 detects the rotation of the second body 200 relative to the first body 100 and generates the rotation detection signal. If a rotation detection signal is received, the control unit 300 determines whether the execution command (i.e. the shortcut number) associated with the operation mode indicated by the rotation detection signal is input, at step S417. If the execution command is input, the control unit 300 executes the operation mode mapped to the execution command, at step S419. Here, the mobile terminal can be configured such that the control unit 300 detects the execution command input before, after, or at the same time as the detection of the rotation of the second body 200.

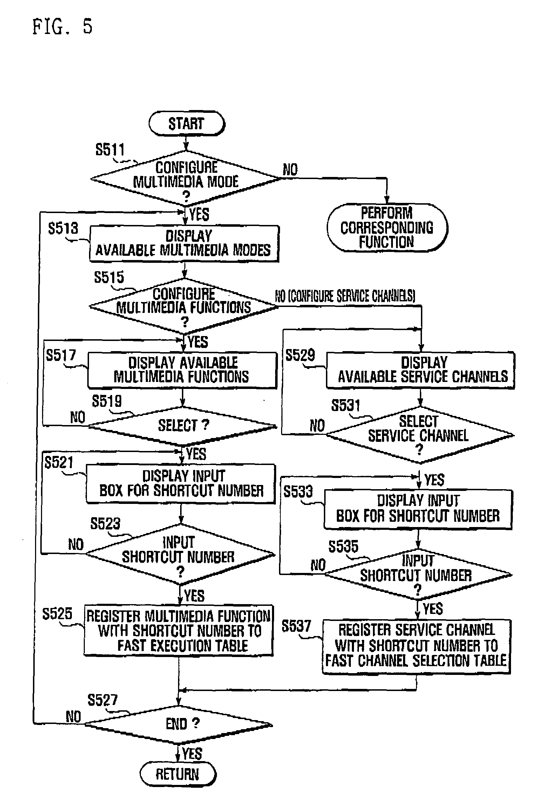

FIG. 5 is a flowchart illustrating a fast execution table generation procedure of FIG. 4.

Referring to FIG. 5, if the mobile terminal enters the user configuration mode, the control unit 300 of the mobile terminal determines whether a multimedia function configuration option is selected by the user, in S511. If a multimedia function configuration option is selected, the control unit 300 controls to display available multimedia functions items, at step S513, The multimedia functions include a broadcast receiver function, a camera function, a music player function, and a Global Positioning System (GPS)-based map service function. Specific multimedia functions may require to be set with various options, e.g., the broadcast receiver function is required to register a plurality of service channels to receive. In this case, it is preferred to set the options with shortcut numbers. In the following description, the explanation is focused on procedures for registering the shortcut numbers of the multimedia functions and the shortcut numbers of the service channels in the broadcast receiver function.

If a multimedia function configuration option is selected, the control unit 300 controls the second display 120 to display a menu screen listing the multimedia function configuration option and the broadcast service channel configuration option, and determines whether a key input for selecting one of the multimedia function configuration option and the broadcast service channel configuration option, at step S515.

If the multimedia function configuration option is selected, the control unit 300 controls the second display 120 to display a multimedia function menu listing the multimedia function items available for the rotation angle-driven execution, at step S517. As listed above, the multimedia functions include the broadcast receiver function, the camera function, the music player function, and the map service function. Next, the control unit determines whether a command is input for selecting one of the multimedia function items, at step S519.

If a command for selecting one of the multimedia function items is detected, the control unit 300 controls to display an dialog box guiding an input of a shortcut number for executing the selected function, at step S521. At this time, the dialog box can be provided with an identification code for identifying the rotation-angle driven execution. The identification code can be a special symbol such as '*' and '#'. Next, the control unit 300 determines whether a shortcut number is input while the dialog box is activated, at step S523. If a shortcut number is input, the control unit 300 registers the shortcut number to the fast execution table in the memory 310 with the selected multimedia function, at step S525.

The fast execution function registration, at steps S517 to S525 is repeated until an end key input is detected, at step S527. If an end key is input, the control unit 300 ends the fast execution function registration procedure. The fast execution table can be structured in the form of Table 1.

**Table 1**

| Multimedia Function | Shortcut Key |
|---|---|
| Broadcast Receiver Function | *1 |
| Camera Function | *2 |
| Music Player (MP3) Function | *3 |
| Map Presentation Function | *4 |

Each multimedia function items can be configured to have sub-menu options. For example, the broadcast function item is provided with an option for registering the service channels. Using the service channel registration option, a plurality of service channels can be registered such that the channel switching is performed by inputting the channel number of the registered service channels in the broadcast receiver function mode.

In this case, the multimedia functions items include a broadcast channel configuration item, at step S513, If the broadcast channel configuration item is selected at step S513, the control unit 300 controls to display a service channel list showing the service channels, at step S529, and determines whether a command for selecting a service channel is input, at step S531. If a service channel selection command is input, the control unit 533 controls a display unit to display a dialog box for guiding shortcut number input, at step S533. If a shortcut number is input through the dialog box, at step 5535, the control unit 300 registers the selected service channel to a fast channel selection table in the memory unit 310 with the shortcut number, at step S537.

The service channel registration procedure, steps S529 to S537, is repeated until an end key is input. If an end key input is detected, the control unit 300 ends the service channel registration procedure. The fast channel selection table can be structured as table 2.

**Table 2**

| Service Channel | Shortcut Number |
|---|---|
| KBS | 1 |
| MBC | 2 |
| SBS | 3 |
| YTN | 4 |

The multimedia function items can be configured to have sub-menu options. For example, the broadcast function can be provided with sub-menu options such as a service channel scan option, a program guide view (an Electronic Program Guide (EPG) view or an Electronic Service Guide (ESG) view) option, a sound mute option , a recording option, etc. The camera function item can be provided with the sub-menu options such as a photographing option, a photo studio option, a photo print option, etc. Also, each sub-menu item can be provided with sub-options. In the cases of the camera function and the music player function, various folder options can be set by the user.

During the fast execution function configuration, the status of preset sub-menu options are presented such that user can resets the sub-menu options. That is, the sub-menu options are presented for setting by the user while repeating steps S521 and S623. In this case, the fast execution table can be structured as shown in Table 3.

| Multimedia Function | | Shortcut Key | |
|---|---|---|---|
| Menu | Sub-menu | Menu | Sub-menu |
| Broadcast Receiver | Channel Scan | *1 | 1 |
| Function | EPG View | | 2 |
| | Mute | | 3 |
| | Recoding | | 4 |
| Camera Function | Photographing | *2 | 1 |
| | Photo Album | | 2 |
| | Photo Editing | | 3 |
| | Printing | | 4 |
| Music Player Function | Settings | *3 | 1 |
| | Album Selection | | 2 |
| | Genre | | 3 |
| Map Presentation Function | | *4 | |

Using the fast execution table with the user settings, it is possible to achieve the fast mode execution. Once the fast multimedia execution function is set, a target multimedia function is executed by inputting a shortcut key and then rotating the second body 200 relative to the first body 100.

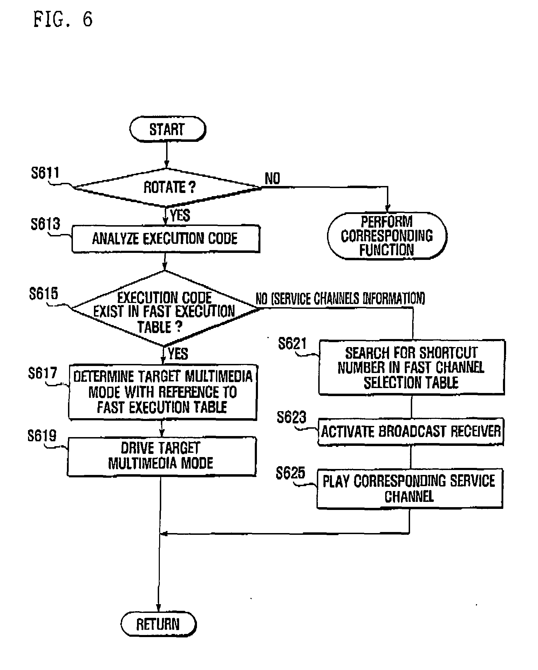

FIG. 6 is a flowchart illustrating a function execution procedure of the operation mode-driving method of FIG. 4 according to an exemplary embodiment of the present invention.

Referring to FIG. 6, the control unit 300 detects whether a rotation of the second body 200 is detected by the rotation detector 320, at step S611. If a rotation is detected, the control unit 300 analyzes an execution code, at step S613. The execution code is analyzed with reference to the execution codes registered to the fast execution table. Each execution code can be composed of a shortcut number or a combination of an identification code and a shortcut number. In this embodiment, an execution code is composed of a combination of an identification code and a shortcut number, and a service channel selection code of the broadcast receiver function is composed of a shortcut number.

If an execution code composed of an identification code and a shortcut number is input at step S613, the control unit 300 determines whether the execution code exists in the fast execution table, at step S615. If the execution code exists in the fast execution table, the control unit 300 checks the multimedia mode associated with the execution code, at step S617, and then drives the corresponding multimedia mode, at step S619.

In the example of table 1, if a rotation of the second body 200 is detected after the input of the execution code "*2", the control unit 300 recognizes that the camera function is selected at step S617 and activates the camera 360 at step S619. Also, if a rotation of the second body 200 is detected after the input of the execution code "*1", the control unit 300 recognizes the selection of the broadcast receiver function at step S617 and activates the broadcast receiver 330 at step S619. In the case that the broadcast receiver function is activated, a default service channel or a most recently played service channel is selected in a broadcast receiver mode.

In the multimedia function execution process, the multimedia function and its options can be selected together.

With reference to table 3, if a rotation of the second body 200 is detected after the input of the execution code "*22", the control unit 300 recognizes that the photo album option of the camera function is selected at step S617 and displays folders stored photographs or photographs as thumbnail images at step 5619. Also, if a rotation of the second body is detected following the input of the execution code "*11", the control unit 300 recognizes that the channel scan option of the broadcast receiver function is selected at step S617 and controls the broadcast receiver 330 to scan service channels at step S619.

If an execution code composed of only a shortcut number is detected at step S613, the control unit 300 determines that the broadcast receiver function is selected at step S615, Next, the control unit 300 retrieves the service channel mapped to the shortcut number from the fast channel selection table, at step S621, and then activates the broadcast receiver 330, at step S623. Consequently, the broadcast data of the selected service channel is played, at step S625.

With the example of table 2, if a rotation of the second body is detected after the input of the shortcut number 1, the control unit 300 retrieves a channel mapped to the shortcut number 1 at step S621 and recognizes that the service channel KBS is selected with reference to the fast channel selection table at step S623. Thus the control unit 300 controls the broadcast receiver 330 to be tuned to received the broadcast signal of the channel KBS at step S625.

FIG, 7 is a flowchart illustrating a function execution procedure of the operation mode-driving of FIG. 4 according to another exemplary embodiment of the present invention.

In this embodiment, the function execution procedure is described with table 3 as a function execution table. Also, it is assumed that the execution code is composed with an identification code and a shortcut number and the channel selection code is composed of only shortcut number. In a case that the service channel registration option for the broadcast receiver function is not enabled, the execution code can be composed of only a shortcut number, Also, the broadcast receiver function can be configured to start playing a default service channel. Although the fast function execution code is composed of an identification code and a shortcut number and the channel selection code is composed of only a shortcut number, the execution code can be a shortcut number and the channel selection code can a combination of an identification code and a shortcut number.

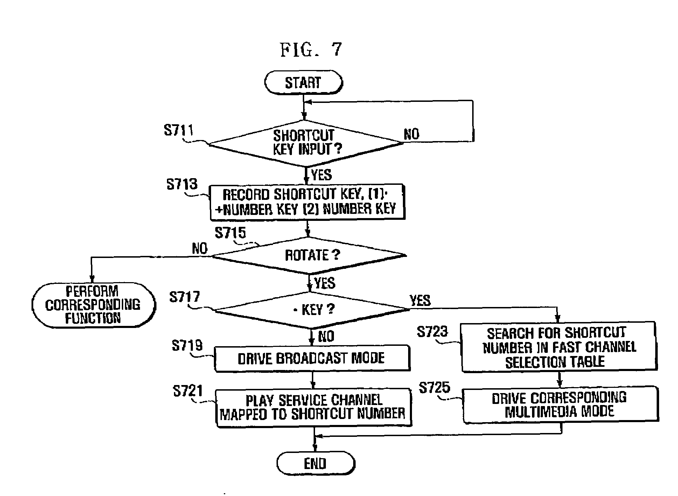

Referring to FIG. 7, the control unit 300 detects whether a key sequence is input, at step S711. If a key sequence is detected, the control unit 300 extracts an execution code, at step S713.

Next, the control unit 300 detects whether a rotation between the first and second bodies 100 and 200, at step S715. If a rotation is detected, the control unit 300 determines whether the execution code has an identification code, at step S717.

if the execution code has an identification code, the control unit 300 retrieves an operation mode represented by the identification code, at step S723, and operates the mobile terminal in the operation mode, at step S725.

In the execution code has no identification code, the control unit 300 operates a broadcast playback mode, at step S719, and plays a service channel mapped to the shortcut number of the execution code, at step S721.

The mobile terminal includes the first and second bodies 100 and 200 coupled with each other by means of the hinge module 250 such that the second body 200 supports the first body 100 to be erected at a rotation angle between the first and second bodies 100 and 200 as shown in FIG. 1C. Preferably, the first display 100 of the first body 100 is in a landscape arrangement at this angle.

Although the operation mode-driving mechanism and method are described in focusing on the operation mode-driving from the communication mode to the multimedia mode, the fast operation mode-driving from the multimedia mode to the communication is implemented can be implemented in a similar manner.

In order to enter the communication mode while operating in the multimedia mode, it is required to place the second body 200 back such that the first and second bodies 100 and 200 are straightly arranged in the longitudinal direction of the mobile terminal, i.e. in the normal state.

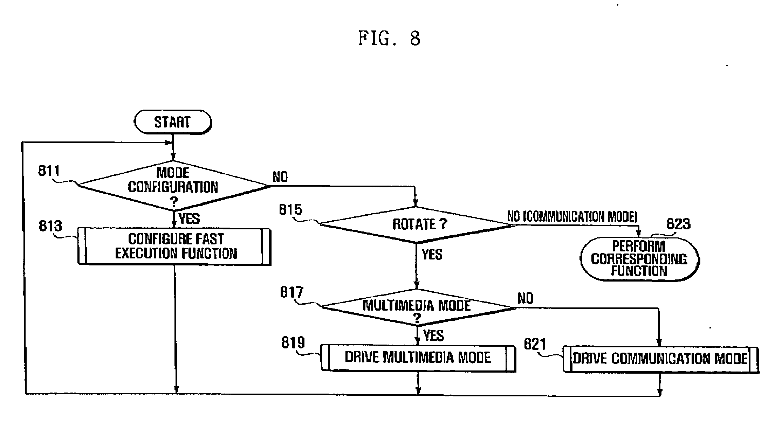

FIG. 8 is a flowchart illustrating an operation mode-driving method according to another exemplary embodiment of the present invention. In this embodiment, the operation modes of the mobile terminal are determined by the relationship of the first and second bodies 100 and 200, i.e., the normal state in which the first and second bodies 100 and 200 are arranged so as to be a bar-type and the rotated state in which the second body 200 is rotated relative to the first body 100 on a longitudinal axis along a length of the mobile terminal.

The operation mode is determined by the angle between the first and second bodies 100 and 200 that is detected by the rotation detector 320. The hinge module 250 is provided with a sensor for sensing the rotation of the second body 200 relative to the first body 100. If the locking module 150 engaging the first and second bodies 100 and 200 are unlocked and the second body 200 is rotated on the longitudinal axis, the rotation detector 320 detects the rotation of the second body 200 relative to the first body 100 by means of the sensor. However, if the second body 200 is rotated back and the locking module is locked, the rotation detector 320 detects the locking state on the basis of the angle between the first and the second bodies 100 and 200. In a case that the sensor is installed at the locking module 150, the rotation detector 320 can detect whether the mobile terminal is in the normal state or the rotated state according to whether the locking module 150 is in an engaged state or a disengaged state.

If it is detected that the second body 200 is rotated relative to the first body 100, the control unit 300 controls the mobile terminal to enter the multimedia mode. However, if the second body 200 is rotated back such that the first and second bodies 100 and 200 are engaged by the locking module 150, the control unit 300 controls the mobile terminal to enter the communication mode.

In the user configuration for a detailed setting of the functions of the mobile terminal, the fast execution codes for the multimedia mode and communications mode can be set with different identification codes. For example, the fast execution codes for the multimedia mode functions and the communication mode functions can be identified by an identification code of '*' and '#', respectively. In this case, the control unit 300 checks the identification code and shortcut number of the execution code input after detection of the rotation of the second body 200 and performs a corresponding function mapped to the shortcut number of the operation mode identified by the identification code.

Referring to FIG. 8, if a user command is input, the control unit determines whether the user command is a command for configuring a fast execution function configuration, at step S811. If the command is a command for configuring a fast execution function configuration, the control unit performs a fast execution function configuration procedure, at step S813. In the fast execution function configuration procedure, the control unit 300 guides the operation mode selection for applying the fast execution function and displays menu options associated with the selected operation mode and dialog box to enable of inputting execution code (a shortcut number or a combination of an identification code and a shortcut number). If an execution code is inputted, the control unit 300 registers the execution code in the fast execution table together with the selected operation mode. This procedure is performed similar to the procedure of FIG. 5.

If the user command is not a fast execution function configuration command, at step S811, the control unit 300 determines whether the user command is a rotation signal detected by the rotation detector 320, at step S815. If the user command is a rotation signal, the control unit 300 detects an execution code following the rotation signal and determines whether the target operation mode is the multimedia mode or the communication, at step S817. The target operation mode can be determined by the rotated direction of the second body 200 relative to the first body 100 or by the identification code contained in the execution code. If the target operation mode is the multimedia mode, the control unit 300 checks the shortcut number contained in the execution code and performs a function mapped to the shortcut number in accordance with the function execution procedure of FIG. 6, at step S819. If the target operation mode is the communication mode, the control unit 300 checks the shortcut number of the execution code and performs a function mapped to the shortcut number in similar procedure of FIG. 6.

Although exemplary embodiments of the present invention are described in detail hereinabove, it should be clearly understood that many variations and/or modifications of the basic inventive concepts herein taught which may appear to those skilled in the present art will still fall within the spirit and scope of the present invention, as defined in the appended claims.

As described above, the operation mode-driving mechanism for a mobile terminal determines a target operation mode in accordance with a rotation angle between the first and second bodies constituting the mobile terminal and determines a specific function of the target operation mode on the basis of an execution code input before or after the detection of the rotation, whereby operation mode-driving can be performed simply without complex key manipulation.

## Claims

1. An operation mode-driving method for a mobile terminal including a first body having a first display and a second display and a second body having a first keypad and a second keypad, the second body being pivotally coupled with the first body on a longitudinal axis of the mobile terminal, comprising:
determining whether a rotation-based driving function is activated; and
if the rotation-based driving function is activated, driving an operation mode on a basis of whether the first and second bodies are rotated relative to each other.

2. The operation mode-driving method of claim 1, further comprising setting execution codes for executing functions associated with each operation mode.

3. The operation mode-driving method of claim 2, wherein the operation modes comprise a broadcast mode,

4. The operation mode-driving method of claim 3, wherein the second body rotates relative to the first body and supports the first body in an erect and rotated state.

5. An operation mode-driving method for a mobile terminal including a first body having a first display and a second display and a second body having a first keypad and a second keypad, the second body being pivotally coupled with the first body on a longitudinal axis of the mobile terminal, comprising:
determining whether a rotation between the first and second bodies is detected together with an execution code; and
if a rotation and an execution code are detected, driving a target operation mode associated with the rotation and executing a target function indicated by the execution code.

6. The operation mode-driving method of claim 5, further comprising setting execution codes for executing functions associated with each operation mode, each execution code including a shortcut number.

7. The operation mode-driving method of claim 6, wherein the target operation mode is a broadcast mode and the shortcut number is mapped to a service channel.

8. The operation mode-driving method of claim 7, wherein the second body rotates relative to the first body and supports the first body in an erect and rotated state.

9. The operation mode-driving method of claim 5, further comprising:
providing a configuration screen for configuring the target operation mode and the execution code; and
registering the target operation mode and the execution codes for executing functions of the target operation mode on a basis of user feedback, each execution code having an identification code for identifying the target operation mode and a shortcut number for indicating the target function;

10. The operation mode driving method of claim 9, wherein determining whether a rotation between the first and second bodies and an execution code are detected comprises:
checking whether the execution code contains an identification code;
if the execution code contains an identification code, determining the target function of the target operation mode on a basis of the identification code and a shortcut number contained together with the identification code; and
if the execution code does not contain an identification code, determining the target function is a broadcast playback mode and a service channel of the broadcast playback mode on a basis of a shortcut number contained in the execution code.

11. The operation mode driving method of claim 10, wherein the second body rotates relative to the first body and supports the first body in an erect and rotated state.

12. An operation mode-driving method for a mobile terminal including a first body having a first display and a second display and a second body having a first keypad and a second keypad, the second body being pivotally coupled with the first body on a longitudinal axis of the mobile terminal, comprising:
determining whether a rotation-based driving function is activated;
If a rotation-based driving function is activated, detecting a coupling state of the first and second bodies;
if the mobile terminal is in a normal state, operating the mobile terminal in a multimedia mode; and
if the mobile terminal is in a rotated state, operating the mobile terminal in a communication mode.

13. The operation mode-driving method of claim 12, further comprising:
providing an operation mode configuration screen for configuring functions of the multimedia mode and the communication mode; and
configuring the functions of the multimedia mode and the communication mode on a basis of user feedback.

14. The operation mode-driving method of claim 13, wherein the rotated state is a state in which the first and second bodies are rotated relative to each other, and the normal state is a state in which the first and second bodies are coupled without rotation.

15. The operation mode-driving method of claim 14, wherein the multimedia mode is a broadcast playback mode.

16. The operation mode-driving method of claim 15, wherein the second body supports the first body in an erect and rotated state.

17. An operation mode-driving method for a mobile terminal including a first body having a first display and a second display and a second body having a first keypad and a second keypad, the second body being pivotally coupled with the first body on a longitudinal axis of the mobile terminal, comprising:
determining whether a rotation-based driving function is activated;
if a rotation-based driving function is activated, detecting a coupling state of the first and second bodies and an execution code;
if the coupling state is a rotated state, operating the mobile terminal in a multimedia mode and executing a function indicated by the execution code; and
if the coupling state is a normal state, operating the mobile terminal in a communication mode and executing a function indicated by the execution code.

18. The operation mode-driving method of claim 17, further comprising:
displaying an operation mode configuration screen for configuring functions of the multimedia mode and the communication mode;
if a user feedback for selecting the multimedia mode is detected, displaying available functions associated with the multimedia mode;
registering the functions with shortcut numbers on a basis of user feedback;
if a user feedback for selecting the communication mode is detected, displaying available functions associated with the communication mode; and
registering the functions with shortcut numbers on a basis of user feedback.

19. The operation mode-driving method of claim 18, wherein the rotated state is a state in which the first and second bodies are rotated relative to each other, and the normal state is a state in which the first and second bodies are coupled without rotation,

20. The operation mode-driving method of claim 19, wherein the multimedia mode is a broadcast playback mode and the shortcut number is a channel for a service channel.

21. The operation mode-driving method of claim 20, wherein the second body supports the first body in an erect and rotated state.

22. A mobile terminal comprising:
a first body having a first display on a front surface of the first body and a second display on a rear surface of the first body;
a second body having a first keypad on a front surface of the second body facing in the same direction as the first screen and a second keypad on a rear surface of the second body facing the same direction of the second screen, the first and second bodies being coupled to rotate relative to each other on a longitudinal axis of the mobile terminal;
a rotation detector for detecting a rotation between the first and second bodies; and
a control unit for, if a rotation is detected, driving a target operation mode.

23. The mobile terminal of claim 22, further comprising a broadcast receiver that is operated by the rotation between the first and second bodies.

24. The mobile terminal of claim 23, further comprising a memory for recording channel numbers of service channels supported by the broadcast receiver, the control unit retrieving and playing a service channel mapped to a channel number input.

25. The mobile terminal of claim 24, further comprising:
a broadcast receiver; and
a memory for storing a fast execution table which maps the operation modes to rotation angles between the first and second bodies and a fast channel selection table which maps service channels to be received by the broadcast receiver to shortcut numbers.
